# EUROPÄISCHE PATENTSCHRIFT

(11) **EP 2 474 236 B1**
(45) Veröffentlichungstag und Bekanntmachung des Hinweises auf die Patenterteilung: **24.04.2013**
(21) Anmeldenummer: 11176767.9
(22) Anmeldetag: 07.08.2011
(51) Int. Cl.: A23L 1/00, A23L 1/01, A23L 3/54, A23L 1/09, A23L 1/36, A23G 3/54, A23G 3/52, A23P 1/14

(54) **Verfahren zur Herstellung von Süßwarenprodukten**
Method for manufacturing confectionery products
Procédé de fabrication de produits de confiserie

(30) Priorität: 07.01.2011 EP 11150369
(43) Veröffentlichungstag der Anmeldung: 11.07.2012
(73) Patentinhaber: Ludwig Schokolade GmbH & Co. Kg, 51469 Bergisch Gladbach (DE)
(72) Erfinder: Nevian, Andreas, 66793 Saarwellingen (DE); Ney, Markus Johann, 66773 Schwalbach Elm (DE)
(74) Vertreter: Splanemann, Rainer

(56) Entgegenhaltungen:
- US-A- 3 682 651
- US-A- 5 342 635
- US-A1- 2008 179 318
- DATABASE WPI Week 201101 Thomson Scientific, London, GB; AN 2010-M07518 XP002636412, & CN 101 816 398 A (UNIV JIMEI) 1. September 2010 (2010-09-01)
- M. REGIER ET AL: 'Mikrowellen- und Mikrowellen-Vakuumtrocknung von Lebensmitteln' CHEMIE INGENIEUR TECHNIK Bd. 76, Nr. 4, 01 April 2004, Seiten 424 - 432, XP055040378 DOI: 10.1002/cite.200400066 ISSN: 0009-286X

## Beschreibung

Die vorliegende Erfindung liegt auf dem Gebiet der Herstellung von Nahrungsmitteln und betrifft ein Verfahren zur Herstellung von Süßwarenprodukten.

### Stand der Technik

Für die industrielle Herstellung von Nahrungsmitteln mit verlängerter Haltbarkeit werden verschiedenste Trocknungstechniken eingesetzt. Neben der Lufttrocknung (Dörren), bei der den Nahrungsmitteln in speziellen Trockenapparaten Wasser entzogen wird, wird häufig die Gefriertrocknung eingesetzt, die eine schonende Behandlung von beispielsweise Früchten und Kaffee ermöglicht. Bei der Gefriertrocknung werden die Nahrungsmittel auf sehr niedrige Temperaturen von beispielsweise -70°C gekühlt und das gefrorene Wasser anschließend durch Sublimation in einer evakuierten Umgebung entzogen. Zwar bleiben bei der Gefriertrocknung ätherische Öle als Geschmacksträger erhalten, jedoch verändern die Nahrungsmittel relativ stark Form, Volumen und Farbe. In jüngerer Zeit kommt vermehrt die Mikrowellen-Vakuumtrocknung bei Gemüse, Obst, Fleisch- und Fischprodukten zum Einsatz. Bei diesem Verfahren werden die Nahrungsmittel in speziellen Mikrowellen-Vakuumtrocknungsbehältern evakuiert und mit Mikrowellen bestrahlt, wobei Form und Farbe der Nahrungsmittel weitgehend erhalten bleiben. In der Patentliteratur wurde die Mikrowellen-Vakuumtrocknung beispielsweise in der deutschen Patentanmeldung DE P4036112.8 beschrieben. Mikrowellen-Vakuumtrocknungsbehälter werden derzeit von einer Reihe von Firmen im Handel vertrieben.

In der Zusammenfassung der chinesischen Schutzrechtsanmeldung CN 101816398 (Database WPI, Week 201101, Thomsom Scientific, London GB AN 2010-M07518) ist ein Verfahren zur Herstellung von Kürbisflocken durch Mikrowellen-Vakuum-Poppen gezeigt. Die Kürbisflocken werden aus einer Masse aus Kürbis, Stärke, Mehl, Öl und Zucker hergestellt.

Das US-Patent Nr. 3682651 A zeigt ein Verfahren zur Herstellung eines Getreideprodukts, bei dem eine Masse aus den optionalen Bestandteilen Zucker, Öl bzw. Fett und Gelatine durch Mikrowellen-Puffen behandelt wird.

### Aufgabenstellung

Die Aufgabe der vorliegenden Erfindung besteht darin, ein Verfahren zur Herstellung von Süßwarenprodukten mit verlängerter Haltbarkeit und besonderen organoleptischen und geschmacklichen Eigenschaften anzugeben. Diese und weitere Aufgaben werden nach dem Vorschlag der Erfindung durch ein Verfahren zur Herstellung von Süßwarenprodukten mit den Merkmalen des unabhängigen Patentanspruchs gelöst. Vorteilhafte Ausgestaltungen der Erfindung sind durch die Merkmale der Unteransprüche angegeben.

Im Sinne vorliegender Erfindung bezieht sich der Begriff "Komponente" auf eine Zutat zur Herstellung der Grundmasse. Dabei kann jede Komponente aus einem einzigen Bestandteil bestehen oder aus mehreren Bestandteilen hergestellt sein. Ein Bestandteil dient somit als Zutat zur Herstellung einer Komponente, wobei für den Fall, dass eine Komponente nur aus einem einzigen Bestandteil besteht, dieser mit der Komponente identisch ist. Andererseits besteht jeder Bestandteil aus einem oder mehreren Inhaltsstoffen. Inhaltsstoffe in einem Bestandteil können zugegeben werden oder bereits im Bestandteil enthalten sein. Angaben bezüglich prozentualer Gewichtsanteile beziehen sich auf einen oder mehrere Inhaltsstoffe eines selben Bestandteils, jeweils bezogen auf das Gesamtgewicht aller Inhaltsstoffe dieses Bestandteils.

Erfindungsgemäß ist ein Verfahren zur Herstellung von Süßwarenprodukten gezeigt. Das Verfahren umfasst die im Weiteren beschriebenen, sukzessiven Schritte: Herstellen einer Grundmasse aus einer Zuckerkomponente, einer Eiweißkomponente, einer Fettkomponente, sowie einem Geschmacksadditiv, das wenigstens einen geschmacksbildenden Bestandteil enthält. Insbesondere kann es sich bei der Eiweißkomponente um eine Eiweißlösung, bei der Zuckerkomponente um eine Zuckerlösung, bei der Fettkomponente um ein Fettgemisch handeln.

Die Zuckerkomponente besteht aus einem oder mehreren Bestandteilen, wobei sie einen oder mehrere zuckerhaltige Bestandteile enthält. Beispielsweise ist die Zuckerkomponente aus mehreren Bestandteilen hergestellt, wobei die Bestandteile jeweils als Zutat zugegeben werden. Die Zuckerkomponente kann beispielsweise auch einen oder mehrere nicht-zuckerhaltige Bestandteile enthalten. Ein zuckerhaltiger Bestandteil enthält einen oder mehrere Inhaltsstoffe, wobei zumindest ein Inhaltstoff ein Zucker ist. Insbesondere kann ein zuckerhaltiger Bestandteil mehrere aus verschiedenen Zuckern bestehende Inhaltsstoffe enthalten. Ein zuckerhaltiger Bestandteil kann insbesondere auch nicht aus Zucker bestehende Inhaltsstoffe enthalten.

Die Zuckerkomponente enthält einen oder mehrere zuckerhaltige Bestandteile, wobei der Zuckeranteil wenigstens eines zuckerhaltigen Bestandteils mehr als 50 Gew.-% (Gewichtsprozent), insbesondere mehr als 80 Gew.-%, beträgt. Enthält die Zuckerkomponente lediglich einen einzigen zuckerhaltigen Bestandteil, so beträgt der Zuckeranteil dieses zuckerhaltigen Bestandteils mehr als 50 Gew.-%, insbesondere mehr als 80 Gew.%. Enthält die Zuckerkomponente mehrere zuckerhaltige Bestandteile, so beträgt der Zuckeranteil eines oder mehrerer, beispielsweise aller, zuckerhaltigen Bestandteile jeweils mehr als 50 Gew.-%, insbesondere mehr als 80 Gew.-%. Enthält die Zuckerkomponente nur einen einzigen Bestandteil, so ist der Zuckeranteil des zuckerhaltigen Bestandteils mit dem Zuckeranteil der Zuckerkomponente identisch.

Im Sinne vorliegender Erfindung umfasst der Begriff "Zucker" auch süßende Zuckeraustauschstoffe, beispielsweise Sorbit.

Die Eiweißkomponente besteht aus einem oder mehreren Bestandteilen, wobei sie einen oder mehrere eiweißhaltige Bestandteile enthält. Beispielsweise ist die Eiweißkomponente aus mehreren Bestandteilen hergestellt, wobei die Bestandteile jeweils als Zutat zugegeben werden. Die Eiweißkomponente kann beispielsweise auch einen oder mehrere nicht-eiweißhaltige Bestandteile enthalten. Ein eiweißhaltiger Bestandteil enthält einen oder mehrere Inhaltsstoffe, wobei zumindest ein Inhaltstoff ein Eiweiß ist. Insbesondere kann ein eiweißhaltiger Bestandteil mehrere aus verschiedenen Eiweißen bestehende Inhaltsstoffe enthalten. Ein eiweißhaltiger Bestandteil kann insbesondere auch nicht aus Eiweiß bestehende Inhaltsstoffe enthalten.

Die Eiweißkomponente enthält einen oder mehrere eiweißhaltige Bestandteile, wobei der Eiweißanteil wenigstens eines eiweißhaltigen Bestandteils mehr als 50 Gew.-%, insbesondere mehr als 80 Gew.-%, beträgt. Enthält die Eiweißkomponente lediglich einen einzigen eiweißhaltigen Bestandteil, so beträgt der Eiweißanteil dieses eiweißhaltigen Bestandteils mehr als 50 Gew.-%, insbesondere mehr als 80 Gew.-%. Enthält die Eiweißkomponente mehrere eiweißhaltige Bestandteile beträgt der Eiweißanteil eines oder mehrerer, beispielsweise aller, eiweißhaltigen Bestandteile jeweils mehr als 50 Gew.-%, insbesondere mehr als 80 Gew.-%. Enthält die Eiweißkomponente nur einen einzigen Bestandteil, so ist der Eiweißanteil des eiweißhaltigen Bestandteils mit dem Eiweißanteil der Eiweißkomponente identisch.

Als eiweißhaltiger Bestandteil kann insbesondere Gelatine verwendet werden. Bei dem eiweißhaltigen Bestandteil, welcher einen Eiweißanteil von mehr als 50 Gew.-% hat, handelt es sich nicht um ein Mehl, welches überwiegend (bezogen auf Gewichtsanteile) keine eiweißhaltigen Inhaltsstoffe enthält. Entsprechendes gilt, falls die Eiweißkomponente nur einen einzigen eiweißhaltigen Bestandteil aufweist.

Die Fettkomponente besteht aus einem oder mehreren Bestandteilen, wobei sie einen oder mehrere fetthaltige Bestandteile enthält. Beispielsweise ist die Fettkomponente aus mehreren Bestandteilen hergestellt, wobei die Bestandteile jeweils als Zutat zugegeben werden. Die Fettkomponente kann beispielsweise auch einen oder mehrere nicht-fetthaltige Bestandteile enthalten. Ein fetthaltiger Bestandteil enthält einen oder mehrere Inhaltsstoffe, wobei zumindest ein Inhaltstoff ein Fett ist. Insbesondere kann ein fetthaltiger Bestandteil mehrere aus verschiedenen Fetten bestehende Inhaltsstoffe enthalten. Ein fetthaltiger Bestandteil kann insbesondere auch nicht aus Fett bestehende Inhaltsstoffe enthalten.

Die Fettkomponente enthält einen oder mehrere fetthaltige Bestandteile, wobei der Fettanteil wenigstens eines fetthaltigen Bestandteils mehr als 60 Gew.-%, insbesondere mehr als 95 Gew.-%, beträgt. Enthält die Fettkomponente lediglich einen einzigen fetthaltigen Bestandteil, so beträgt der Fettanteil dieses fetthaltigen Bestandteils mehr als 60 Gew.-%, insbesondere mehr als 95 Gew.-%. Enthält die Fettkomponente mehrere fetthaltige Bestandteile, beträgt der Fettanteil eines oder der mehrerer, beispielsweise aller, fetthaltigen Bestandteile jeweils mehr als 60 Gew.-%, insbesondere mehr als 95 Gew.-%. Enthält die Fettkomponente nur einen einzigen Bestandteil, so ist der Fettanteil des fetthaltigen Bestandteils mit dem Fettanteil der Fettkomponente identisch.

Erfindungsgemäß wird bei der Herstellung der Grundmasse zunächst die Zuckerkomponente erhitzt. Vorteilhaft wird die Zuckerkomponente in einem Temperaturbereich von 120-130°C, beispielsweise 125°C, insbesondere bei einer Trockenmasse von ca. 92 Gew.-% erhitzt. Anschließend wird die Zuckerkomponente unter Vakuumtrocknung gekühlt, wobei die Zuckermasse vorzugsweise auf eine Temperatur von 110°C gekühlt wird. Anschließend wird zur Zuckerkomponente die Eiweißkomponente hinzugefügt, wodurch eine Zucker/Eiweiß-Masse erhalten wird. Die Zucker/Eiweiß-Masse wird anschließend belüftet, was in vorteilhafter Weise bei einem Überdruck von ca. 3 bar für einen Zeitraum von beispielsweise 3 min durchgeführt wird. Zu der belüfteten Zucker/Eiweiß-Masse wird anschließend die Fettkomponente gegeben und homogen darin verteilt, wodurch eine Fett/Zucker/Eiweiß-Masse gewonnen wird. Schließlich wird zur Fertigstellung der Grundmasse das Geschmacksadditiv zur Fett/Zucker/Eiweiß-Masse gegeben. Alternativ kann das Geschmacksadditiv wahlweise zu jeder einzelnen und/oder zu mehreren Komponenten der Grundmasse und/oder zur Zucker/Eiweiß-Masse gegeben werden.

Formen von Kernkörpern (Einlagen) aus der Grundmasse. Bei einer vorteilhaften Ausgestaltung wird zur Formung der Kernkörper zunächst ein Grundmassenteppich, d.h. eine zusammenhängende Schicht aus Grundmasse, hergestellt. In den Grundmassenteppich werden die Kernkörper insbesondere mit einer kugeligen Form eingeprägt und anschließend vom restlichen Grundmassenteppich separiert. Das Einprägen der Kernkörper in den Grundmassenteppich erfolgt vorteilhaft in einem Temperaturbereich von 30°C - 70°C. Zudem kann es von Vorteil sein, wenn die Kernkörper vom übrigen Grundmassenteppich bei einer Temperatur des Grundmassenteppichs von beispielsweise ca. 10°C separiert werden. Dann erfolgt ein Selektieren der Kernkörper bezüglich einer vorbestimmbaren Kernkörpergröße, so dass die gewonnenen Kernkörper eine einheitliche, zumindest annähernd gleiche Größe haben. Als "Größe" wird hier und im Weiteren eine bestimmte (wählbare) Abmessung der Kernkörper verstanden. Bei kugeligen Kernkörpern ergibt sich die Größe aus dem Durchmesser der Kernkörper. Bei nicht-kugeligen Kernkörpern kann zu diesem Zweck eine bestimmte Abmessung der Kernkörper wahlfrei festgelegt werden.

Durchführen einer Mikrowellen-Vakuumtrocknung (Mikrowellen-Puffing) der Kernkörper mit zumindest annähernd gleicher Größe in einem Mikrowellen-Vakuumtrocknungsbehälter. Der Mikrowellen-Vakuumtrocknungsbehälter ist so ausgebildet, dass ein wahlfrei einstellbarer Unterdruck bei wahlfrei einstellbaren Temperaturen erzeugt und die Kernkörper mit Mikrowellen einer wahlfrei einstellbaren Leistung bestrahlt werden können. Vorteilhaft haben die Kernkörper beim Mikrowellen-Vakuumtrocknen im Mikrowellen-Vakuumtrocknungsbehälter eine maximale Schütthöhe von ca. 10 cm.

Bei einer besonders vorteilhaften Ausgestaltung des erfindungsgemäßen Verfahrens wird beim Mikrowellen-Vakuumtrocknen der Kernkörper zunächst unter gleichzeitigem Bewegen der Kernkörper ein Unterdruck von beispielsweise ca. 30 mbar erzeugt. Das Bewegen der Kernkörper kann beispielsweise durch Bewegen des Mikrowellen-Vakuumtrocknungsbehälters erreicht werden, wobei es von Vorteil sein kann, wenn der Mikrowellen-Vakuumtrocknungsbehälter mit einer Geschwindigkeit von ca. 5 m/min, bewegt wird. Zudem kann es von Vorteil sein, wenn der Mikrowellen-Vakuumtrocknungsbehälter insbesondere beim Einfüllen der Kernkörper temperiert wird, so dass die Kernkörper bei Einfüllen in den Mikrowellen-Vakuumtrocknungsbehälter eine Temperatur aufweisen, die beispielsweise im Bereich von 12°C - 14°C liegt. Ist der gewünschte Unterdruck im Mikrowellen-Vakuumtrocknungsbehälter eingestellt, werden die Kernkörper bei diesem Unterdruck gestaffelt mit Mikrowellenstrahlung bestrahlt. Vorteilhaft werden die Kernkörper zunächst mit einer Leistung im Bereich von 6-8 kW, insbesondere bei 7 kW, für einen Zeitraum im Bereich von 80-100 s, insbesondere 90 s, und anschließend mit einer Leistung im Bereich von 8-10 kW, insbesondere bei 9 kW, für einen Zeitraum im Bereich von 170-190 s, insbesondere 180 s, bestrahlt. Dann wird im Mikrowellen-Vakuumtrocknungsbehälter ein Unterdruck von beispielsweise ca. 45 mbar eingestellt und die Kernkörper werden bei diesem Unterdruck mit einer Leistung im Bereich von 5-7 kW, insbesondere bei 6 kW, für einen Zeitraum im Bereich von 260-280 s, insbesondere 270 s, bestrahlt. In besonders vorteilhafter Weise ist die Leistung der Mikrowellenstrahlung beim Mikrowellen-Puffing so gewählt, dass die Kernkörper während des Mikrowellen-Puffings eine maximale Temperatur im Bereich von 75-80°C, insbesondere 80°C, nicht überschreiten.

Überziehen der gepufften Kernkörper mit zumindest einer Überzugsschicht, insbesondere Schokolade, welche geeignet ist, eine Feuchtigkeitsaufnahme der Kernkörper zu hemmen. Im Sinne vorliegender Erfindung erstreckt sich der Begriff "Überziehen" auf dem Fachmann an sich bekannte Möglichkeiten eine Überzugsschicht auf die Kernkörper aufzubringen. Insbesondere umfasst der Begriff das Aufbringen einer Überzugsschicht durch Eintauchen in oder Besprühen mit einem die Überzugsschicht bildenden Überzugsmaterial sowie das Dragieren der Kernkörper, beispielsweise in einer Trommel. Bei einer besonders vorteilhaften Ausgestaltung werden die Kernkörper zunächst mit einer ersten Überzugsschicht, insbesondere Schokolade, und anschließend mit einer zweiten Überzugsschicht über der ersten Überzugsschicht überzogen. Bei der zweiten Überzugsschicht kann es sich insbesondere um eine Glanz- bzw. Polierschicht handeln. Vorteilhaft werden die Kernkörper beispielsweise mit Schellack als zweite Überzugsschicht dragiert, was vorteilhaft in einer Trommel erfolgt.

Weiterhin kann es von Vorteil sein, wenn die Kernkörper jeweils so mit der zumindest einen Überzugsschicht, insbesondere ersten Überzugsschicht, überzogen werden, dass der Kernkörper bezüglich des überzogenen Kernkörpers einen Gewichtsanteil im Bereich von 24-26 Gew.-%, insbesondere 25 Gew.-%, aufweist.

Durch das erfindungsgemäße Verfahren können in vorteilhafter Weise neuartige Süßwarenprodukte hergestellt werden, die aufgrund der deutlich reduzierten hygroskopischen Eigenschaften unter normalen Umgebungsbedingungen eine verlängerte Haltbarkeit aufweisen. Die Süßwarenprodukte zeichnen sich durch besondere organoleptische und geschmackliche Eigenschaften aus, wobei der Geschmack bzw. das Aroma der enthaltenen Bestandteile durch das Herstellungsverfahren beibehalten und sogar noch verstärkt werden kann. Die Kernkörper erhalten durch das Mikrowellen-Puffing eine Porung, was zu einem leichten, luftigen Geschmacksempfinden mit einem crunchigen Biss führt.

Bei einer besonders vorteilhaften Ausgestaltung des erfindungsgemäßen Verfahrens werden bei der Herstellung der Grundmasse masse als Geschmacksadditiv geröstete Erdnüsse zur Fett/Zucker/Eiweiß-Masse gegeben.

Gezeigt ist auch ein Süßwarenprodukt, welches einen durch Mikrowellen-Vakuumtrocknung gepufften Kernkörper umfasst, der aus einer Grundmasse, enthaltend eine Zuckerkomponente mit einem oder mehreren zuckerhaltigen Bestandteilen, wobei der Zuckeranteil wenigstens eines zuckerhaltigen Bestandteils mehr als 50 Gew.-% beträgt, eine Eiweißkomponente mit einem oder mehreren eiweißhaltigen Bestandteilen, wobei der Eiweißanteil wenigstens eines eiweißhaltigen Bestandteils mehr als 50 Gew.-% beträgt, eine Fettkomponente mit einem oder mehreren fetthaltigen Bestandteilen, wobei der Fettanteil wenigstens eines fetthaltigen Bestandteils mehr als 60 Gew.-% beträgt, sowie ein Geschmacksadditiv mit wenigstens einem geschmacksbildenden Bestandteil, hergestellt ist. Zudem umfasst das Süßwarenprodukt zumindest eine den Kernkörper überziehende Überzugsschicht, insbesondere Schokolade, welche geeignet ist, eine Feuchtigkeitsaufnahme der Kernkörper zu hemmen. In besonders vorteilhafter Weise ist der Kernkörper mit einer ersten Überzugsschicht, insbesondere Schokolade, und einer zweiten Überzugsschicht über der ersten Überzugsschicht überzogen, insbesondere mit Schellack dragiert, wodurch die Eigenschaft des Überzugsmaterials eine Wasseraufnahme durch den Kernkörper zu hemmen, noch weiter verbessert und die Haltbarkeit des Süßwarenprodukts verlängert werden kann.

### Ausführungsbeispiel

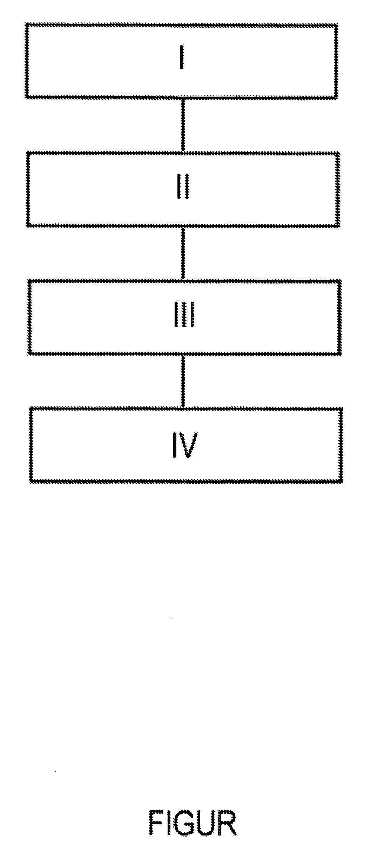

Die Erfindung wird nun anhand eines Ausführungsbeispiels näher erläutert, wobei Bezug auf die beigefügte Zeichnung genommen wird.

Die einzige Figur veranschaulicht in schematischer Weise in Form eines Flussdiagramms die Durchführung des erfindungsgemäßen Verfahrens.

Schritt I: Herstellen einer Grundmasse zum Formen der Kernkörper bzw. Einlagen. Die Grundmasse für die Kernkörper wird aus verschiedenen Komponenten hergestellt. Diese umfasst eine Zuckerlösung, ein Fettgemisch und eine Eiweißlösung, wobei die Zuckerlösung ca. 76 Gew.-%, das Fettgemisch ca. 16 Gew.-% und die Eiweißlösung ca. 8 Gew.-% der Grundmasse ausmachen. Die Zuckerlösung enthält einen oder mehrere zuckerhaltige Bestandteile, beispielsweise gewählt aus Saccharose, Glucosesirup, Lactose, Sorbitsirup, Gerstenmalzextrakt und Karamellzuckersirup, wobei der Zuckeranteil wenigstens eines zuckerhaltigen Bestandteils mehr als 50 Gew.-%, insbesondere mehr als 80 Gew.-%, beträgt. Beispielsweise, jedoch nicht zwingend, beträgt der Zuckeranteil in der Zuckerlösung mehr als 50 Gew.-%.

Die Eiweißlösung enthält einen oder mehrere eiweißhaltige Bestandteile, beispielsweise Hühnereiklarpulver. Anstelle des Hühnereiklarpulvers kann beispielsweise auch Gelatine verwendet werden. Wenigstens ein eiweißhaltiger Bestandteil weist einen Eiweißanteil von mehr als 50 Gew.-%, insbesondere mehr als 80 Gew.-%, auf.

Das Fettgemisch enthält einen oder mehrere fetthaltige Bestandteile, beispielsweise gewählt aus Vollmilchpulver, gezuckerte Kondensmagermilch, Sahnepulver, Kakaobutter, Kakaomasse und pflanzliche Fette. Wenigstens ein fetthaltiger Bestandteil weist einen Fettanteil von mehr als 60 Gew.-%, insbesondere mehr als 95 Gew.-%, auf. Zudem können verschiedene Zuschlagsstoffe bzw. Geschmacksadditive, beispielsweise geröstete Erdnüsse, hinzugefügt werden, um in gewünschter Weise Geschmacksvarianten im fertigen Süßwarenprodukt zu erzeugen.

Für die Herstellung der Grundmasse wird die Zuckerlösung beispielsweise in einer kontinuierlichen Kochanlage auf ca. 125°C erhitzt. Die Trockensubstanz beträgt ca. 92 Gew.-%. Im Anschluss daran wird die gewonnene Zuckermasse vorzugsweise auf eine Temperatur von ca. 110°C beispielsweise durch Evakuieren gekühlt und dabei getrocknet. Dann wird die Eiweißlösung zu der erhaltenen Zuckermasse gegeben und die dabei gewonnene Zucker/Eiweiß-Masse bei einem Überdruck von ca. 3 bar für einen Zeitraum von ca. 3 min belüftet. In einem folgenden Mischprozess wird der durch Belüftung aufgeschlagenen Zucker/Eiweiß-Masse das Fettgemisch hinzugefügt und homogen darin verteilt. Schließlich werden der erhaltenen homogenen Fett/Zucker/Eiweiß-Masse als Geschmacksadditiv geröstete Erdnüsse hinzugefügt. Wichtig hierbei ist, dass die Erdnüsse schonend untergehoben werden, um die Struktur der belüfteten Fett/Zucker/Eiweiß-Masse nicht zu zerstören.

Schritt II: Formen von Kernkörpern (Einlagen) der Süßwarenprodukte aus der hergestellten Grundmasse. Für diese Bearbeitung ist es von Vorteil, wenn die Grundmasse eine Temperatur im Bereich von 30-70°C hat. Die Grundmasse wird zu diesem Zweck beispielsweise zu Rollen geformt und kontinuierlich einem Vorwalzenpaar zugeführt, durch welche ein Teppichstrang geformt wird. Der Grundmassenteppich hat beispielsweise eine Stärke von 10 mm. Der gewonnene Grundmassenteppich wird auf einem temperierbaren Transportband abgelegt und einem Walzwerk, beispielsweise einem Sechswalzenwerk, zugeführt, durch das der Grundmassenteppich auf die gewünschte Endstärke gebracht wird. Im Anschluss hieran ist ein Prägewalzenpaar angeordnet, welches mittels Vertiefungen auf beiden Walzen beispielsweise Kugeln als Kernkörper in den Grundmassenteppich einformt. Der Durchmesser der Kugeln beträgt beispielsweise ca. 10 mm. Es versteht sich, dass die Erfindung hierauf nicht eingeschränkt ist, sondern dass die Kernkörper vielmehr jede andere geeignete Form und Größe haben können.

Der Grundmassenteppich läuft anschließend auf einem Gitterband durch einen Paternoster-Kühler und wird auf ca. 10°C gekühlt, wobei die Kühldauer ca. 10 Minuten dauert. Durch die Kühlung wird die Konsistenz des Grundmassenteppichs fester, so dass die vorgeformten Kugeln in einfacher Weise vom restlichen Grundmassenteppich separiert werden können.

Nachdem die Kugeln bei ca. 10°C separiert wurden, werden sie einer Entgratungstrommel zugeführt, in welcher sie von noch anhaftenden Teppichresten befreit und die Kanten gerundet werden. Die nun völlig runden Kugeln werden durch eine Siebanordnung vorsortiert, um auszuschließen, dass nicht in gewünschter Weise ausgeprägte Kugeln, beispielsweise halbe oder doppelte Kugeln, für die Bearbeitung im weiteren Prozess aussortiert werden. Der übrige Grundmassenteppich und aussortierte Kugeln können dem Prozess zum Formen der Kernkörper wieder zugeführt werden, so dass man die Kernkörper praktisch ohne Grundmassenverlust herstellen kann.

Die auf diese Weise gewonnenen kugeligen Kernkörper haben einen Durchmesser von ca. 10 mm und ein Gewicht von beispielsweise ca. 0,65 g. Die Struktur der Kernkörper kann sehr fest sein und Hartkaramellmasse ähneln, wobei die Oberfläche durch die verarbeiteten Erdnüsse nicht vollständig glatt ist.

Schritt III: Unterziehen der kugeligen Kernkörper einer Mikrowellen-Vakuum-Trocknung (Mikrowellen-Puffing) in einem trommelförmigen Mikrowellen-Vakuumtrocknungsbehälter unter speziellen Bedingungen. Das Mikrowellen-Puffing unterscheidet sich grundlegend von anderen konventionellen Trocknungsverfahren, welche die Trocknungsenergie entweder durch Wärmekonvektion oder durch Kontakt mit warmen Flächen über die Oberflächen in die zu trocknenden Produkte übertragen, wobei sich der Trocknungsfortschritt durch die Wärmeleitfähigkeit der Produkte von außen nach innen bestimmt. Im Unterschied hierzu greift die Trocknungsenergie der Mikrowellen im gesamten Volumen des zu trocknenden Produkts an, so dass nicht die Wärmeleitfähigkeit der Produkte über den Trocknungserfolg entscheidet, sondern die Fähigkeit der Produkte die Energie der Mikrowellen in Wärme umzuwandeln. Da bekanntlich durch Wasser die Energie der Mikrowellen besonders gut in Wärme umgewandelt werden kann, wird durch die Mikrowellenheizung ein schnelles Verdampfen der im Produktinnern enthaltenen Feuchtigkeit erreicht, wobei der Trocknungsprozess rasch und wirtschaftlich von statten geht bis die gewünschte Restfeuchte erreicht ist. Dabei können Aroma und Geschmack weitestgehend erhalten und sogar noch verstärkt werden. Andererseits ermöglicht die Kombination aus Mikrowellenbestrahlung und Vakuum nicht nur eine schonende Trocknung der Produkte, sondern auch ein Puffen (Aufblähen), d.h. eine Volumenvergrößerung der Produkte, die ein Vielfaches des Ausgangsvolumens erreichen kann.

Wie Versuche der Anmelderin gezeigt haben, hat der Unterdruck beim Puffen einen Einfluss auf die Kernkörper, der visuell gut beobachtbar ist. Werden beispielsweise kugelige Kernkörper mit einem Durchmesser von ca. 10 mm hergestellt, so haben die Kernkörper vor dem Mikrowellen-Puffing beispielsweise eine nahezu glatte, glänzende Oberfläche, wobei im Querschnitt deutlich zu erkennen ist, dass es sich bei den Kernkörpern um eine homogene Masse ohne Lufteinschlüsse handelt (visuelle Betrachtung). Wird nun das Mikrowellen-Puffing (mit Unterdruck) durchgeführt, behalten die Kernkörper ihre kugelige Form, wobei sich der Durchmesser der Kernkörper vergrößert und beispielsweise auf ca. 15-20 mm ansteigt. Die Farbe der Kernkörper ist heller und die Struktur knusprig und fest. Der Querschnitt der Kernkörper zeigt ein deutliches Porenbild (visuelle Betrachtung), welches mit der Volumenvergrößerung der Kernkörper einhergeht. Die Poren stellen Lufteinschlüsse dar. Wird im Unterschied hierzu bei der Mikrowellenbehandlung kein Unterdruck angelegt, verlieren die Kernkörper ihre kugelige Form, fließen auseinander und erhalten eine flache Form. Die Größe der nicht-kugeligen Kernkörper beträgt entlang der längsten Abmessung ca. 15 mm, bei einer Höhe von ca. 5-7 mm. Die Oberflächenstruktur bleibt glatt und glänzend. Die Konsistenz der Kernkörper ist weich und deren Farbe ist dunkel. Weiterhin zeigen die ohne Unterdruck hergestellten Kernkörper im Querschnitt keinerlei Poren, vielmehr handelt es sich um eine kompakte Masse ohne Lufteinschlüsse.

Für das Mikrowellen-Puffing werden die kugeligen Kernkörper beispielsweise durch einen Becherwerkförderer dem Mikrowellen-Vakuumtrocknungsbehälter zugeführt, wobei die Kernkörper zunächst in einen Trichter eingefüllt werden, durch den der Mikrowellen-Vakuumtrocknungsbehälter chargenweise gefüllt wird. Der trommelförmige Mikrowellen-Vakuumtrocknungsbehälter verfügt zu diesem Zweck beispielsweise über eine Klappenöffnung, die beim Befüllen nach oben steht und unterhalb des Trichters angeordnet ist. Vorteilhaft beträgt die Schütthöhe der kugeligen Kernkörper im trommelförmigen Mikrowellen-Vakuumtrocknungsbehälter ca. 10 cm, da sich gezeigt hat, dass bei einer größeren Schütthöhe das Puffing-Ergebnis nicht zufrieden stellend ist. Der Mikrowellen-Vakuumtrocknungsbehälter sollte deshalb bei einer gegebenen Beladungsmenge eine geeignete Länge haben, um die gewünschte Füllhöhe nicht zu überschreiten.

Beim Füllen des Mikrowellen-Vakuumtrocknungsbehälter und während des Durchführens der Mikrowellen-Vakuumtrocknung der kugeligen Kernkörper ist es von Vorteil, wenn die Kernkörper eine Temperatur von ca. 12 bis 14°C aufweisen, wodurch ein Verkleben der Kernkörper untereinander zuverlässig und sicher vermieden werden kann. Zudem ist das Mikrowellen-Puffing der kugeligen Kernkörper unterhalb der angegebenen Temperatur nicht optimal, wobei insbesondere die gewünschte Volumenvergrößerung nicht erreicht wird.

Während des Mikrowellen-Puffings wird der beispielsweise auf Rollen gelagerte, trommelförmige Mikrowellen-Vakuumtrocknungsbehälter um eine Zylinderachse nach links und rechts gedreht, wobei der Neigungswinkel nach jeder Seite beispielsweise ca. 90° beträgt. Die Geschwindigkeit, mit der die Trommel gedreht wird, ist sehr wichtig um ein gutes Ergebnis zu erhalten. Im vorliegenden Ausführungsbeispiel wurde die Geschwindigkeit auf 5 m/min eingestellt. Zusätzlich sind im Mikrowellen-Vakuumtrocknungsbehälter Brecher angebracht, durch welche eine ständige Bewegung der kugeligen Kernkörper unterstützt wird. Die Form der Brecher kann wichtig für das erreichte Ergebnis sein. Sind die Brecher zu klein, besteht die Gefahr, dass die Kernkörper durch zu wenig Bewegung und steigende Temperatur verkleben. Sind die Brecher andererseits zu groß, ist die mechanische Belastung für die Kernkörper zu hoch und die Kernkörper fallen aus zu großer Höhe herunter, was wiederum zu einem Verkleben führen kann. Falls durch Verkleben Agglomerate aus kugeligen Kernkörpern entstehen, lassen sich diese ohne Schädigung der Kernkörper praktisch nicht mehr lösen.

Die Trommel wird chargenweise mit kugeligen Kernkörpern beladen, wobei in einer ersten Phase ("Puffing-Phase") ein Vakuum von beispielsweise ca. 30 mbar eingestellt wird. In der Puffing-Phase ist es wichtig ein entsprechend niedriges Vakuum einzustellen, um den kugeligen Kernkörpern in gewünschter Weise die endgültige Form und Größe zu geben. Falls in der Puffing-Phase kein ausreichend hoher Unterdruck eingestellt wird, besteht Gefahr, dass die kugeligen Kernkörper nicht die gewünschte Größe erreichen und eine eher eiförmige Gestalt annehmen. Nachdem der gewünschte Unterdruck erreicht ist, wird die Bestrahlung der Kernkörper mit Mikrowellen gestartet. Die Mikrowellenleistung wird gestaffelt in die Kernkörper eingebracht. Hierbei ist zu beachten, dass die Mikrowellenenergie anfangs nicht zu hoch sein darf, da dies dazu führen kann, dass die Kernkörper von innen her zu früh trocknen, aber außen noch zu feucht sind. In der Folge verbrennen die Kernkörper im Kern. Im vorliegenden Ausführungsbeispiel werden die Kernkörper mit Mikrowellen einer Leistung von 7 kW (Kilowatt) für 90 s (Sekunden) bestrahlt. Anschließend wird die Leistung auf 9 kW heraufgesetzt und die Kernkörper werden für 180 s bestrahlt. In einer zweiten Phase ("Trocknungsphase") wird der Unterdruck auf 45 mbar eingestellt. Die kugeligen Kernkörper haben jetzt bereits ihre gewünschte Sollgröße erreicht und ca. 3-4% Wasser verloren. Bei diesem Unterdruck wird nochmals Mikrowellenenergie eingebracht, wobei die Kernkörper mit Mikrowellen einer Leistung von 6 kW für 270 s bestrahlt werden.

Wichtig hierbei ist, dass die Kernkörper während des Einbringens von Mikrowellenenergie eine Temperatur von ca. 80°C nicht überschreiten, da sonst Verbrennungen im Kern nicht ausgeschlossen werden können. Vor dem Puffing haben die kugeligen Kernkörper einen Durchmesser von ca. 10 mm bei einem Gewicht von ca. 0,65 g. Nach dem Puffing haben die kugeligen Kernkörper einen Durchmesser von ca. 18-20 mm bei einem Gewicht von ca. 0,61 g. Demnach beträgt der Trocknungsverlust ca. 5,9 Gew.-%. Die Volumenvergrößerung der Kernkörper geht mit einem Feuchtigkeitsentzug einher, wobei die Geschmackseigenschaften der Kernkörper beibehalten und sogar noch intensiviert werden.

Die kugeligen Kernkörper haben nach dem Puffing eine dünnwandige Schale, deren Oberfläche etwas porös und nicht ganz rund ist, da die Erdnussstücke teilweise heraus ragen. Das Innere der kugeligen Kernkörper hat eine sehr unterschiedliche Porung, die aus großen und kleinen, ungleichmäßigen Lufteinschlüssen besteht. Trotz der dünnwandigen Schalen sind die Kernkörper durch diese Textur kross und keksartig im Biss.

Die gepufften kugeligen Kernkörper sind stark hygroskopisch, wobei eine hohe Luftfeuchtigkeit alleine schon ausreicht, um Form und Geschmack der Kernkörper zu verändern. Dies erfordert den nächsten Schritt.

Schritt IV: Überziehen der gepufften Kernkörper mit Schokolade, so dass eine Barriereschicht geschaffen wird, durch die ein chemischer Austauschprozess, bei dem der Kernkörper Wasser aufnimmt, zumindest weitgehend unterbunden wird. Wie Versuche gezeigt haben, kann durch diese Maßnahme die Haltbarkeit des Süßwarenprodukts auf die durchschnittliche Haltbarkeit der verwendeten Schokolade, welche in der Regel 12 Monate beträgt, gesteigert werden. Für ein Überziehen mittels Dragierung werden die gepufften Kernkörper beispielsweise über einen Bevorratungsbehälter der Dragiertrommel zugeführt. Vorteilhafter Weise weist das dabei gewonnene Süßwarenprodukt ein Verhältnis zwischen Kernkörper und dragierter Schokoladenmasse von 25 Gew.-% zu 75 Gew.-% auf. Beispielsweise haben die Kernkörper jeweils ein Stückgewicht von 0,6 g (25 Gew.-%), die pro Kernkörper verwendete Schokoladenmasse ein Gewicht von 1,8 g (75 Gew.-%) und das gewonnene Süßwarenprodukt ein Gewicht von 2,4 g (100 Gew.-%). Vorteilhaft beträgt das Schüttgewicht der Süßwarenprodukte ca. 0,38 Kg/L. Die zum Dragieren verwendete Schokolade, insbesondere Milchschokolade, weist vorteilhaft einen Gesamtfettgehalt von mindestens 32 Gew.-% auf. Bei der Verarbeitung ist es vorteilhaft, wenn die Schokolade eine Temperatur im Bereich von 42 - 44°C hat. Hinsichtlich der rheologischen Eigenschaften ist es vorteilhaft, wenn die Schokolade eine Viskosität von 2 - 3 Pa und eine Fließgrenze von 4 - 6 Pa·s hat. Zum Dragieren werden die kugeligen Kernkörper beispielsweise über Sprühvorrichtungen in den sich kontinuierlich drehenden Dragiertrommeln besprüht. Die Kernkörper werden schrittweise mit Schokolade dragiert, wobei jeder Besprühungsvorgang für beispielsweise 30 min unterbrochen wird und bei weiter rotierender Dragiertrommel eine Abkühlphase eingeleitet wird. Dieser Vorgang wird beispielsweise 3 bis 4 Mal wiederholt bis die gesamte Auftragsmenge an Schokolade auf die Kernkörper aufgebracht worden ist.

Schließlich werden die mit Schokolade dragierten Kernkörper mit einer Glanz- bzw. Polierschicht vollständig überzogen. Das Glänzen der Kernkörper kann mit verschiedenen Hilfsmitteln durchgeführt werden, wobei die dragierten Kernkörper im vorliegenden Ausführungsbeispiel zunächst mit einem Öl vorbehandelt und anschließend mit Schellack nachbehandelt werden. Durch die Schicht aus Schellack kann ein zusätzlicher Schutz gegen Austrocknung bzw. Feuchtigkeitsaufnahme erreicht werden, wodurch die Haltbarkeit der Süßwarenprodukte noch weiter verbessert wird. Zudem kann eine verbesserte Trenn- und Gleitwirkung sowie ein ästhetisch besonders ansprechendes Aussehen erreicht werden. Nach dem Aufbringen der Glanzschicht wird das fertige Süßwarenprodukt für ca. 12 Std. bei ca. 18 - 20°C einer Ruhephase zugeführt und kann anschließend in einer Endverpackung verpackt werden. Die Ruhephase dient zum Abtrocknen und Abkühlen der Süßwarenprodukte. Zudem können die Süßwarenprodukte ausdünsten, da die Glanzschicht einen eher unangenehmen Geruch haben kann.

Die erhaltenen Süßwarenprodukte sind zumindest annähernd kugelig ausgebildet und bestehen aus einem gepufften Kernkörper, der sich aus einer gekochten, aufgeschlagenen Zucker/Eiweiß/Fett-Masse und speziell behandelten Erdnüssen zusammensetzt, sowie einer äußeren Überzugsschicht aus Schokolade, beispielsweise Milchschokolade, die final mit einer Glanz- bzw. Polierschicht belegt wird. Das fertige Süßwarenprodukt wiegt ca. 2,4 g und hat einen Durchmesser von ca. 20 - 22 mm. Dem fertigen Süßwarenprodukt geben die vorbehandelten Erdnüsse einen sehr intensiven Erdnussgeschmack, der durch das Mikrowellen-Puffing noch verstärkt wird, da die Feuchtigkeit aus den Kernkörpern entweicht und das Aroma dadurch noch stärker hervorgehoben wird. Die Knackigkeit des Süßwarenprodukts wird durch die gerösteten Erdnüsse verbessert, da nicht nur die Textur der gepufften Kernkörper Biss hat, sondern auch die Erdnüsse. Der Gesamtgeschmack des Süßwarenprodukts ist sehr harmonisch abgestimmt, wobei die durch das Mikrowellen-Puffing bewirkte intensive Erdnussnote und die Schokolade ein sehr abgerundetes Geschmacksprofil ergeben.

## Patentansprüche

1. Verfahren zur Herstellung von Süßwarenprodukten, welches die folgenden sukzessiven Schritte umfasst:
- Herstellen einer Grundmasse aus einer Zuckerkomponente mit einem oder mehreren zuckerhaltigen Bestandteilen, wobei ein zuckerhaltiger Bestandteil einen oder mehrere Inhaltsstoffe enthält, wobei mindestens ein Inhaltsstoff ein Zucker ist, wobei der Zuckeranteil wenigstens eines zuckerhaltigen Bestandteils mehr als 50 Gew.-% beträgt, wobei sich der prozentuale Gewichtsanteil auf das Gesamtgewicht aller Inhaltsstoffe dieses zuckerhaltigen Bestandteils bezieht, einer Eiweißkomponente mit einem oder mehreren eiweißhaltigen Bestandteilen, wobei ein einweißhaltiger Bestandteil einen oder mehrere Inhaltsstoffe enthält, wobei mindestens ein Inhaltsstoff ein Eiweiß ist, wobei der Eiweißanteil wenigstens eines eiweißhaltigen Bestandteils mehr als 50 Gew.-% beträgt, wobei sich der prozentuale Gewichtsanteil auf das Gesamtgewicht aller Inhaltsstoffe dieses eiweißhaltigen Bestandteils bezieht, einer Fettkomponente mit einem oder mehreren fetthaltigen Bestandteilen, wobei ein fetthaltiger Bestandteil einen oder mehrere Inhaltsstoffe enthält, wobei mindestens ein Inhaltsstoff ein Fett ist, wobei der Fettanteil wenigstens eines fetthaltigen Bestandteils mehr als 60 Gew.-% beträgt, wobei sich der prozentuale Gewichtsanteil auf das Gesamtgewicht aller Inhaltsstoffe dieses fetthaltigen Bestandteils bezieht, und einem Geschmacksadditiv mit wenigstens einem geschmacksbildenden Bestandteil;
- Formen von Kernkörpern aus der Grundmasse;
- Mikrowellen-Vakuumtrocknen mit Puffing der Kernkörper;
- Überziehen der Kernkörper mit zumindest einer Überzugsschicht, insbesondere Schokolade, welche geeignet ist, eine Feuchtigkeitsaufnahme der Kernkörper zu hemmen;
wobei die Herstellung der Grundmasse die folgenden sukzessiven Schritte umfasst:
- Erhitzen der Zuckerkomponente;
- Kühlen der Zuckerkomponente;
- Zugeben der Eiweißkomponente zur Zuckerkomponente zum Herstellen einer Zucker/Eiweiß-Masse;
- Belüften der Zucker/Eiweiß-Masse;
- Zugeben und homogenes Verteilen der Fettkomponente in der Zucker/Eiweiß-Masse zum Herstellen einer Fett/Zucker/Eiweiß-Masse;
- Zugeben eines Geschmacksadditivs zur Zuckerkomponente und/oder zur Fettkomponente und/oder zur Eiweißkomponente und/oder zur Zucker/Eiweiß-Masse und/oder zur Fett/Zucker/Eiweiß-Masse.

2. Verfahren nach Anspruch 1, **dadurch gekennzeichnet, dass** die Kernkörper mit einer ersten Überzugsschicht, insbesondere Schokolade, und einer zweiten Überzugsschicht über der ersten Überzugsschicht überzogen, insbesondere mit Schellack dragiert werden.

3. Verfahren nach Anspruch 1, **dadurch gekennzeichnet, dass** die Zuckerkomponente in einem Temperaturbereich von 120 - 130°C, insbesondere bei 125°C, insbesondere bei einer Trockenmasse von 92 Gew.-%, erhitzt wird.

4. Verfahren nach einem der Ansprüche 1 oder 3, **dadurch gekennzeichnet, dass** die Zuckerkomponente auf eine Temperatur von ca. 110°C beispielsweise durch Evakuieren gekühlt wird.

5. Verfahren nach einem der Ansprüche 1 bis 4, **dadurch gekennzeichnet, dass** die Zucker/Eiweiß-Masse bei einem Überdruck von insbesondere 3 bar, insbesondere für einen Zeitraum von 3 min, belüftet wird.

6. Verfahren nach einem der Ansprüche 1 bis 5, **dadurch gekennzeichnet, dass** das Formen der Kernkörper aus der Grundmasse die folgenden sukzessiven Schritte umfasst:
- Ausbilden eines Grundmassenteppichs;
- Einprägen insbesondere kugeliger Kernkörper in den Grundmassenteppich;
- Separieren der Kernkörper vom restlichen Grundmassenteppich;
- Selektieren der Kernkörper bezüglich einer vorbestimmbaren Kernkörpergröße.

7. Verfahren nach Anspruch 6, **dadurch gekennzeichnet, dass** die Kernkörper in den Grundmassenteppich in einem Temperaturbereich von 30 - 70°C eingeprägt werden.

8. Verfahren nach einem der Ansprüche 6 oder 7, **dadurch gekennzeichnet, dass** die Kernkörper vom übrigen Grundmassenteppich bei einer Temperatur des Grundmassenteppichs in einem Bereich von 8 - 12°C, insbesondere bei 10°C, separiert werden.

9. Verfahren nach einem der Ansprüche 1 bis 8, **dadurch gekennzeichnet, dass** die Kernkörper beim Mikrowellen-Vakuumtrocknen eine maximale Schütthöhe in einem Bereich von 8 - 12 cm, insbesondere 10 cm, in einem Mikrowellen-Vakuumtrocknungsbehälter haben.

10. Verfahren nach einem der Ansprüche 1 bis 9, **dadurch gekennzeichnet, dass** das Mikrowellen-Vakuumtrocknen der Kernkörper die folgenden sukzessiven Schritte umfasst:
a) Erzeugen eines Unterdrucks insbesondere von 30 mbar unter gleichzeitigem Bewegen der Kernkörper, wobei ein Mikrowellen-Vakuumtrocknungsbehälter insbesondere mit einer Geschwindigkeit von 5 m/min, bewegt wird;
b) sukzessives Bestrahlen der Kernkörper mit Mikrowellenstrahlung bei dem in Schritt a) eingestellten Unterdruck gemäß dem folgenden Schema:
Bestrahlen der Kernkörper mit einer Leistung der Mikrowellenstrahlung im Bereich von 6 - 8 kW, insbesondere bei 7 kW, für einen Zeitraum im Bereich von 80 - 100 s, insbesondere 90 s;
Bestrahlen der Kernkörper mit einer Leistung der Mikrowellenstrahlung im Bereich von 8 - 10 kW, insbesondere bei 9 kW, für einen Zeitraum im Bereich von 170 - 190 s, insbesondere 180 s;
c) Erzeugen eines Unterdrucks insbesondere von 45 mbar;
d) Bestrahlen der Kernkörper bei dem in Schritt c) eingestellten Unterdruck mit einer Leistung der Mikrowellenstrahlung im Bereich von 5 - 7 kW, insbesondere bei 6 kW, für einen Zeitraum im Bereich von 260 - 280 s, insbesondere 270 s.

11. Verfahren nach Anspruch 10, **dadurch gekennzeichnet, dass** die Leistung der Mikrowellenstrahlung so gewählt ist, dass die Kernkörper eine maximale Temperatur im Bereich von 75 - 80°C, insbesondere 80°C, aufweisen.

12. Verfahren nach einem der Ansprüche 1 bis 11, **dadurch gekennzeichnet, dass** die Kernkörper jeweils so mit der zumindest einen Überzugsschicht überzogen werden, dass der Kernkörper bezüglich des überzogenen Kernkörpers einen Gewichtsanteil im Bereich von 24 - 26 Gew.-%, insbesondere 25 Gew.-%, aufweist.

## Claims

1. Method for manufacturing confectionery products, which is comprised of the following successive steps:
- Producing a basic mass from a sugar component with one or more sugar-containing components, wherein one sugar-containing component contains one or more ingredients, wherein at least one ingredient is a type of sugar, wherein the sugar content of at least one of the sugar-containing components exceeds 50% by weight, wherein the weight share in percent refers to the total weight of all ingredients of this sugar-containing component, a protein component with one or more protein-containing components, wherein one protein-containing component contains one or more ingredients, wherein at least one ingredient is a type of protein, wherein the protein content of at least one of the protein-containing components exceeds 50% by weight, wherein the weight share in percent refers to the total weight of all the ingredients of this protein-containing component, a fat component with one or more fat-containing components, wherein one fat-containing component contains one or more ingredients, wherein at least one ingredient is a type of fat, wherein the fat content of at least one of the fat-containing components exceeds 60% by weight, wherein the weight share in percent refers to the total weight of all ingredients of this fat-containing component, and a flavour additive with at least one flavouring component;
- forming centres out of the basic mass;
- microwave-vacuum drying with puffing of the centres;
- coating the centres with at least one coating layer, in particular chocolate, which is suitable for obstructing the centres from absorbing moisture;
wherein the production of the basic mass is comprised of the following successive steps:
- heating the sugar component;
- cooling the sugar component;
- adding the protein component to the sugar component in order to produce a sugar/protein mass;
- aerating the sugar/protein mass;
- adding the fat component to the sugar/protein mass and homogeneous distribution of the fat component in order to produce a fat/sugar/protein mass;
- Adding a flavour additive to the sugar component and/or fat component and/or protein component and/or sugar/protein mass and/or fat/sugar/protein mass.

2. Method according to claim 1, which is **characterised by** the centres being coated with a first coating, in particular chocolate, and a second coating on top of the first coating, in particular being panned with shellac.

3. Method according to claim 1, which is **characterised by** the sugar component being heated at a temperature ranging from 120 - 130°C, in particular at 125°C and particularly at a dry mass of 92% by weight.

4. Method according to either claim 1 or 3, which is **characterised by** the sugar component being cooled to a temperature of about 110°C, e.g. by means of evacuation.

5. Method according to one of the claims 1 to 4, which is **characterised by** the sugar/protein mass being aerated under a high pressure of particularly 3 bar, over a period of time of particularly 3 minutes.

6. Method according to one of the claims 1 to 5, which is **characterised by** the fact that forming the centres out of the basic mass is comprised of the following successive steps:
- forming a carpet out of the basic mass;
- embedding particularly nodular centres into the basic mass carpet;
- separating the centres from the remaining basic mass carpet;
- selecting the centres with respect to a predefinable centre seize.

7. Method according to claim 6, which is **characterised by** the centres being embedded into the basic mass carpet at a temperature ranging from 30 - 70°C.

8. Method according to either claim 6 or 7, which is **characterised by** the centres being separated from the remaining basic mass carpet whereas the temperature of the basic mass carpet ranges from 8 - 12°C, in particular 10°C.

9. Method according to one of the claims 1 to 8, which is **characterised by** the centres having a maximum fill height in the range of 8 - 12 cm during microwave-vacuum drying, particularly 10cm, in a microwave-vacuum drying vessel.

10. Method according to one of the claims 1 to 9, which is **characterised by** the microwave-vacuum drying of the centres being comprised of the following successive steps:
a) creating low pressure, particularly 30 mbar while moving the centres at the same time, wherein a microwave-vacuum drying vessel is being moved at a speed of particularly 5 m/min;
b) successive irradiation of the centres with microwave radiation at low pressure which was created during step a) according to the following procedure:
irradiation of the centres with a radiated power of the microwaves in the range of 6 - 8 kW, in particular at 7 kW, over a period of time in the range of 80 - 100 s, in particular 90 s;
irradiation of the centres with a radiated power of the microwaves in the range of 8 - 10 kW, in particular at 9 kW, over a period of time in the range of 170 - 190 s, in particular 180 s;
c) creating low pressure, of particularly 45 mbar;
d) irradiation of the centres at low pressure which was created during step c) with a radiated power of the microwaves in the range of 5 - 7 kW, in particular at 6 kW, over a period of time in the range of 260 - 280 s, in particular 270 s.

11. Method according to claim 10, which is **characterised by** the radiated power of the microwaves being chosen in such a fashion that the centres show a maximum temperature in the range between 75 - 80°C, in particular 80°C.

12. Method according to one of the claims 1 to 11, which is **characterised by** the centres being coated with at least one coating layer in such a fashion that the centre, with respect to the coated centre has a weight share in the range of 24 - 26% by weight, in particular 25% by weight.

## Revendications

1. Procédé de production de produits de confiserie, comprenant les étapes successives suivantes :
- on prépare un mélange de base à partir d'une composante glucidique comprenant un ou plusieurs constituants contenant des glucides, un constituant glucidique comprenant une ou plusieurs substances constitutives, au moins une substance constitutive étant un glucide, la teneur en glucides d'au moins un constituant contenant des glucides étant supérieure à 50 % en poids, la proportion pondérale exprimée en pour-cent se référant au poids total de toutes les substances constitutives de ce constituant contenant des glucides, d'une composante protéique comprenant un ou plusieurs constituants contenant des protéines, un constituant protéique comprenant une ou plusieurs substances constitutives, au moins une substance constitutive étant un protéine, la teneur en protéines d'au moins un constituant protéique étant supérieure à 50 % en poids, la proportion pondérale exprimée en pour-cent se référant au poids total de toutes les substances constitutives de ce constituant protéique, d'une composante lipidique comprenant un ou plusieurs constituants contenant des lipides, un constituant lipidique comprenant une ou plusieurs substances constitutives, au moins une substance constitutive étant un lipide, la teneur en lipides d'au moins un constituant contenant des lipides étant supérieure à 60 % en poids, la proportion pondérale exprimée en pour-cent se référant au poids total de toutes les substances constitutives de ce constituant contenant des lipides, et d'un additif influençant le goût comprenant au moins un constituant aromatisant ;
- on forme des corps centraux à partir du mélange de base ;
- on soumet les corps centraux à un séchage sous vide aux micro-ondes avec effet de « puffing » ;
- on fait enrober les corps centraux avec au moins une couche d'enrobage, en particulier de chocolat, qui est appropriée pour inhiber l'absorption d'humidité par les corps centraux ;
la préparation du mélange de base comprenant les étapes successives suivantes :
- on fait chauffer la composante glucidique ;
- on fait refroidir la composante glucidique ;
- on ajoute la composante protéique à la composante glucidique pour préparer une masse glucide/protéine ;
- on fait aérer la masse glucide/protéine ;
- on ajoute la composante lipidique pour la répartir de façon homogène dans la masse glucide/protéine en vue de préparer une masse lipide/glucide/protéine ;
- on ajoute un additif influençant le goût à la composante glucidique et/ou à la composante lipidique et/ou à la composante protéique et/ou à la masse de glucide/protéine et/ou à la masse de lipide/glucide/protéine.

2. Procédé selon la revendication 1, **caractérisé en ce que** l'on fait enrober les corps centraux avec une première couche d'enrobage, en particulier avec du chocolat, et avec une seconde couche d'enrobage sur la première couche d'enrobage, en particulier on la fait dragéifier avec du shellac.

3. Procédé selon la revendication 1, **caractérisé en ce que** l'on fait chauffer la composante glucidique dans une plage de température de 120 à 130 °C, en particulier à 125 °C, en particulier pour une matière sèche de 92 % en poids.

4. Procédé selon l'une des revendications 1 ou 3, **caractérisé en ce que** l'on fait refroidir la composante glucidique à une température d'environ 110 °C, par exemple par évacuation.

5. Procédé selon l'une des revendications 1 à 4, **caractérisé en ce que** l'on fait aérer la masse glucide/protéine à une surpression en particulier de 3 bar, en particulier pendant une période de 3 minutes.

6. Procédé selon l'une des revendications 1 à 5, **caractérisé en ce que** le formage des corps centraux à partir du mélange de base comprend les étapes successives suivantes :
- on forme un tapis avec le mélange de base ;
- on enfonce des corps centraux en particulier sphériques dans le tapis du mélange de base ;
- on sépare les corps centraux du reste du tapis de mélange de base ;
- on sélectionne les corps centraux par rapport à une taille prédéterminée des corps centraux.

7. Procédé selon la revendication 6, **caractérisé en ce que** l'on enfonce les corps centraux dans le tapis de mélange de base dans une plage de température de 30 à 70 °C.

8. Procédé selon l'une des revendications 6 ou 7, **caractérisé en ce que** l'on sépare les corps centraux du reste du tapis de mélange de base à une température du tapis de mélange de base dans une plage de 8 à 12 °C, en particulier à 10 °C.

9. Procédé selon l'une des revendications 1 à 8, **caractérisé en ce que** lors du séchage sous vide aux micro-ondes les corps centraux ont une hauteur maximale en vrac dans une plage de 8 à 12 cm, en particulier de 10 cm, dans un récipient de séchage sous vide aux micro-ondes.

10. Procédé selon l'une des revendications 1 à 9, **caractérisé en ce que** le séchage sous vide aux micro-ondes des corps centraux comprend les étapes successives suivantes :
a) on génère une dépression en particulier de 30 mbar tout en déplaçant en même temps les corps centraux, en faisant déplacer un récipient de séchage sous vide aux micro-ondes en particulier à une vitesse de 5 m/min ;
b) on fait irradier successivement les corps centraux par un rayonnement micro-ondes à la dépression réglée à l'étape a), selon le schéma suivant :
irradiation des corps centraux avec une puissance du rayonnement micro-ondes dans la plage de 6 à 8 kW, en particulier à 7 kW pour une période dans la plage de 80 à 100 s, en particulier de 90 s ;
irradiation des corps centraux avec une puissance du rayonnement micro-ondes dans la plage de 8 à 10 kW, en particulier à 9 kW pour une période dans la plage de 170 à 190 s, en particulier de 180 s ;
c) on génère une dépression en particulier de 45 mbar ;
d) on fait irradier les corps centraux à la dépression réglée à l'étape c) avec une puissance du rayonnement micro-ondes dans la plage de 5 à 7 kW, en particulier à 6 kW pour une période dans la plage de 260 à 280 s, en particulier de 270 s.

11. Procédé selon la revendication 10, **caractérisé en ce que** l'on choisit la puissance du rayonnement micro-ondes de telle sorte que les corps centraux présentent une température maximale dans la plage de 75 à 80 °C, en particulier de 80 °C.

12. Procédé selon l'une des revendications 1 à 11, **caractérisé en ce que** l'on fait enrober les corps centraux chacun avec ladite au moins une couche d'enrobage de telle sorte que par rapport au corps central enrobé, le corps central présente une part pondérale dans la plage de 24 à 26 % en poids, en particulier de 25 % en poids.
